# EUROPEAN PATENT APPLICATION

(11) **EP 4 773 361 A1**
(43) Date of publication of application: **08.07.2026**
(21) Application number: 24889233.3
(22) Date of filing: 30.10.2024
(51) Int. Cl.: H01M 50/124, H01M 50/126, H01M 50/121, H01M 50/119, H01M 50/133, H01M 50/105, H01M 50/129

(54) **POUCH FILM LAMINATE, POUCH-TYPE BATTERY CASE, AND POUCH-TYPE SECONDARY BATTERY**

(30) Priority: 08.11.2023 KR 20230154026; 21.05.2024 KR 20240065939
(71) Applicant: LG Energy Solution, Ltd., Seoul 07335 (KR)
(72) Inventor: SONG, Dae Woong, Daejeon 34122 (KR); HWANG, Soo Ji, Daejeon 34122 (KR); SHIN, Ji Hyun, Daejeon 34122 (KR); KIM, Gi Woung, Daejeon 34122 (KR); LEE, Wan Soo, Daejeon 34122 (KR)
(74) Representative: Plasseraud IP
(86) International application number: PCT/KR2024/096436
(87) International publication number: WO 2025/101047

(57) **Abstract**

The present invention relates to a pouch film laminate body including a base layer, a gas barrier layer, and a sealant layer, which are sequentially laminated, wherein an amount of a slip agent present on the surface of the sealant layer is 5 mg/m² to 25 mg/m², wherein the amount of the slip agent is obtained by cutting the pouch film laminate body to 100 mm in an MD x 100 mm in a TD, adding 5 ml of chloroform dropwise on the surface of the sealant layer of the pouch film laminate body, followed by leaving the pouch film laminate body to stand for 1 minute, thereby preparing a slip agent extraction solution, and then measuring an amount of the slip agent contained in the slip agent extraction solution by gas chromatography.

## Description

### TECHNICAL FIELD

### Cross-reference to Related Applications

This application claims the benefit of Korean Patent Application Nos. 10-2023-0154026, filed on November 8, 2023, and 10-2024-0065939, filed on May 21, 2024, in the Korean Intellectual Property Office, the disclosures of which are incorporated herein in their entirety.

### Technical Field

The present invention relates to a pouch film laminate body, a pouch-type battery case, and a pouch-type secondary battery.

### BACKGROUND ART

A secondary battery is applied and used in small products such as digital cameras, P-DVDs, MP3Ps, mobile phones, PDAs, portable game devices, power tools, and e-bikes, as well as large products that require high power, such as electric vehicles or hybrid vehicles, and power storage devices for storing surplus generated power or renewable energy, and power storage devices for backup power.

Typically, a secondary battery is manufactured by applying an electrode active material slurry on a positive electrode current collector and a negative electrode current collector to manufacture a positive electrode and a negative electrode, stacking the positive electrode and the negative electrode on both sides of a separator to form an electrode assembly having a predetermined shape, and then accommodating the electrode assembly in a battery case, followed by injecting an electrolyte thereinto and sealing the case.

The secondary battery is classified into a pouch-type secondary battery, a can-type secondary battery, etc. according to the material of the case accommodating the electrode assembly. The pouch-type secondary battery accommodates the electrode assembly in a pouch made of a flexible polymer material. Also, the can-type secondary battery accommodates the electrode assembly in a case made of a material such as a metal or plastic.

The pouch-type battery case is manufactured by performing press processing on a flexible pouch film laminate body, thereby forming a cup portion. Then, when the cup portion is formed, an electrode assembly is stored in an accommodation space of the cup portion and a sealing portion is sealed to manufacture a secondary battery.

In the press processing, drawing molding is performed by inserting a pouch film into press equipment and applying pressure to a pouch film laminate body with a punch, thereby stretching the pouch film laminate body. The pouch film laminate body is generally formed of a plurality of layers in which a polymer film such as polyethyleneterephthalate is laminated on one surface of a gas barrier layer made of a metal, and a sealant layer is laminated on the other surface thereof.

Recently, as the demand for high-capacity batteries such as electric vehicle batteries or ESS batteries increases, the demand for battery cases capable of accommodating more electrode assemblies is increasing. Accordingly, a method for increasing a cup portion molding depth of a pouch-type battery case, or a two-cup molding method for molding a cup portion in each of an upper case and a lower case, thereby increasing a cup portion volume has been attempted.

When manufacturing a typical pouch film laminate body, in order to prevent pouch films from being adhered to each other and to facilitate post-processing, a slip agent is included in a sealant layer of the innermost layer of the pouch film, or a slip agent is applied on the surface of the sealant layer. However, if an excessive amount of the slip agent is present on the surface of the sealant layer, there is a problem in that a mold for molding a cup portion is excessively contaminated, thereby degrading processability, or frictional force is lowered, thereby generating wrinkles in the pouch film laminate body when molding the cup portion. In addition, if the slip agent is present in a small amount on the surface of the sealant layer, there is a problem in that moldability is degraded when molding the cup portion.

Therefore, there is a demand for the development of a pouch film laminate body for preventing contamination of a molding mold, thereby increasing processibility, and preventing degradation in moldability when molding a cup portion.

### DISCLOSURE OF THE INVENTION

### TECHNICAL PROBLEM

The present invention is to solve the above-described problem, and provides a pouch film laminate body, a pouch-type battery case, and a pouch-type secondary battery, in which contamination of a molding mold is prevented, thereby increasing processibility, and reducing wrinkles and degradation in moldability when molding a cup portion.

Problems to be solved by the present invention are not limited to the above-mentioned problem, and other problems that are not mentioned may be apparent to those skilled in the art from the following description.

### TECHNICAL SOLUTION

[1] The present invention provides a pouch film laminate body including a base layer, a gas barrier layer, and a sealant layer, which are sequentially laminated, wherein an amount of a slip agent present on the surface of the sealant layer is 5 mg/m² to 25 mg/m², wherein the amount of the slip agent is obtained by cutting the pouch film laminate body to 100 mm in an MD x 100 mm in a TD, adding 5 ml of chloroform dropwise on the surface of the sealant layer of the pouch film laminate body, followed by leaving the pouch film laminate body to stand for 1 minute, thereby preparing a slip agent extraction solution, and then measuring an amount of the slip agent contained in the slip agent extraction solution by gas chromatography.
[2] In [1] above, in the present invention, the amount of the slip agent present on the surface of the sealant layer may be 5 mg/m² to 14 mg/m².
[3] In [1] or [2] above, in the present invention, the slip agent may include one or more selected from fatty acid amide-based compounds.
[4] In at least one among [1] to [3] above, in the present invention, the base layer may include one or more of polyethyleneterephthalate (PET) and nylon.
[5] In at least one among [1] to [4] above, in the present invention, the base layer may have a thickness of 5 µm to 70 µm.
[6] In at least one among [1] to [5] above, in the present invention, the gas barrier layer may include one or more metals selected from the group consisting of aluminum (Al), copper (Cu), stainless steel (SUS), nickel (Ni), titanium (Ti), and Invar.
[7] In at least one among [1] to [6] above, in the present invention, the gas barrier layer may have a thickness of 20 µm to 100 µm.
[8] In at least one among [1] to [7] above, in the present invention, the sealant layer may include one or more selected from polypropylene (PP), acid-modified polypropylene (PPa), and cast polypropylene (CPP).
[9] In at least one among [1] to [8] above, in the present invention, the sealant layer may have a thickness of 30 µm to 130 µm.
[10] In at least one among [1] to [9] above, in the present invention, the pouch film laminate body may have a thickness of 120 µm to 300 µm.
[11] The present invention provides a pouch-type battery case manufactured by drawing-molding at least one pouch film laminate body among [1] to [10] above.
[12] In [11] above, in the present invention, the pouch-type battery case may include a cup portion, wherein the cup portion may include a plurality of punch edges formed by being rounded with a radius of curvature of 1 mm or less.
[13] In [11] or [12] above, in the present invention, the pouch-type battery case may include a cup portion, wherein the cup portion may include a plurality of die edges formed by being rounded with a radius of curvature of 1.5 mm or less.
[14] In [11] to [13] above, in the present invention, the pouch-type battery case may include a cup portion, wherein the cup portion may include a plurality of thickness edges formed by being rounded with a radius of curvature of 0.5 mm to 5 mm.
[15] The present invention provides a pouch-type secondary battery including at least one pouch-type battery case among [11] to [14] above.

### ADVANTAGEOUS EFFECTS

A pouch film laminate body according to the present invention controls an amount of a slip agent present on the surface of a sealant layer to a predetermined range, thereby improving processibility by shortening a slip agent cleaning cycle of a molding mold due to an excessive amount of the slip agent on the surface of the sealant layer, and prevents wrinkles generated when molding a cup portion, thereby improving the moldability of the pouch film laminate body. In addition, degradation in moldability due to lack of the amount of the slip agent present on the surface of the sealant layer is prevented.

### BEST DESCRIPTION OF THE DRAWING

The drawings attached herein illustrate preferred embodiments of the present invention by example, and serve to enable technical concepts of the present invention to be further understood together with detailed description of the invention given below, and therefore the present invention is interpreted only with matters in such drawings. Meanwhile, the shape, size, scale, or ratio of elements in the drawings included in the present specification may be exaggerated to emphasize a more clear description.
FIG. 1 is a cross-sectional view of a pouch film laminate body according to an embodiment of the present invention.
FIG. 2 is an exploded assembly view of a secondary battery according to an embodiment of the present invention.
FIG. 3 is a cross-sectional view of a pouch-type battery case for describing the radius of curvature of a die edge and of a punch edge formed in a cup portion of a pouch-type battery case according to an embodiment of the present invention.
FIG. 4 is a view illustrating a portion of a pouch-type battery case for describing a punch corner formed in a cup portion of a pouch-type battery case according to an embodiment of the present invention, the length of each punch corner, and a thickness edge.

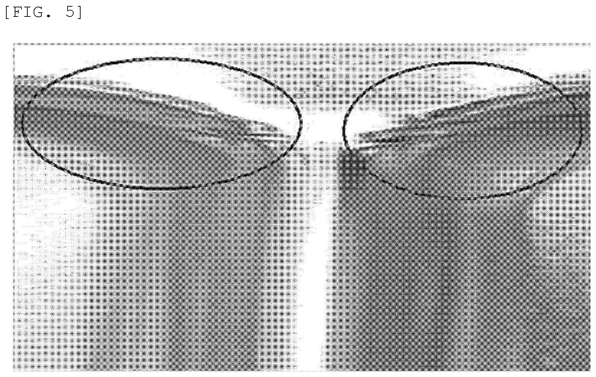

FIG. 5 is a view illustrating the generation of wrinkles appearing at the maximum molding depth when a cup portion is molded in a pouch film laminate body manufactured according to Comparative Example 3.

### MDOE FOR CARRYING OUT THE INVENTION

Hereinafter, the present invention will be described in more detail.

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

In the present invention, a machine direction (MD) refers to a longitudinal direction of a pouch film laminate body, and a transverse direction (TD) refers to a width direction of the pouch film laminate body.

As a result of repeated development of a pouch film laminate body which prevents degradation in processibility due to frequent mold cleaning, suppresses wrinkles generated when molding a cup portion of the pouch film laminate body, and increases the maximum molding depth of the cup portion, the inventors of the present invention have found that it is possible to manufacture a pouch film laminate body having excellent processibility and moldability if an amount of a slip agent present on the surface of a sealant layer measured by a specific measurement method is controlled to a predetermined range, and have completed the present invention.

### Pouch film laminate body

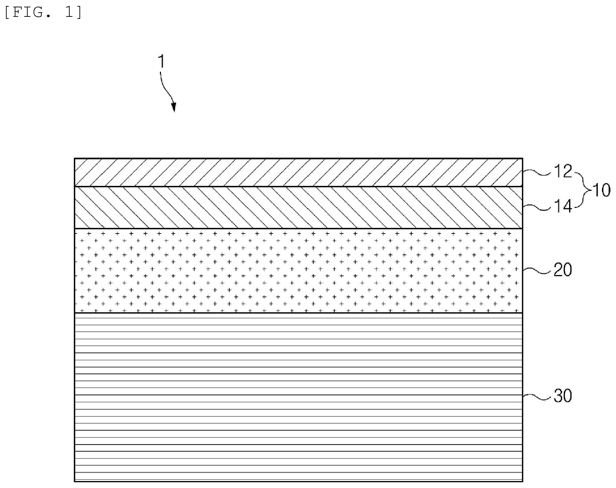

FIG. 1 illustrates an embodiment of a pouch film laminate body according to the present invention. Hereinafter, referring to FIG. 1, the pouch film laminate body according to the present invention will be described.

Referring to FIG. 1, a pouch film laminate body 1 according to the present invention includes a base layer 10, a gas barrier layer 20, and a sealant layer 30, which are sequentially laminated, wherein an amount of a slip agent present on the surface of the sealant layer 30 is 5 mg/m² to 25 mg/m², wherein the amount of the slip agent is obtained by cutting the pouch film laminate body to 100 mm in an MD direc tion x 100 mm in a TD direction, adding 5 ml of chloroform dropwise on the surface of the sealant layer of the pouch film laminate body, followed by leaving the pouch film laminate body to stand for 1 minute, thereby preparing a slip agent extraction solution, and then measuring an amount of the slip agent contained in the slip agent extraction solution by gas chromatography.

When manufacturing a typical pouch film laminate body, in order to prevent pouch film laminate bodies from being adhered to each other and to facilitate post-processing, a method of including a slip agent in a sealant layer of the innermost layer of the pouch film, or applying a slip agent on the surface of the sealant layer has been used to allow the slip agent to be present on the surface of the sealant layer. However, if there is an excessive amount of the slip agent on the surface of the sealant layer, a molding mold is quickly contaminated by the slip agent, so that the molding mold needs to be cleaned frequently, resulting in a problem of degrading processibility, and friction force is too low, resulting in a problem of generating wrinkles even at a low molding stroke.

In addition, in order to prevent the problems of processibility and wrinkles, if no slip agent is allowed, or a too small amount of the slip agent is allowed to be present on the surface of the sealant layer, there is a problem in that pouch film laminate bodies are adhered to each other, thereby degrading processibility, or friction force is too high when molding a cup portion of the pouch film laminate body, thereby degrading the maximum molding depth of the cup portion.

Therefore, if the amount of the slip agent present on the surface of the sealant layer is controlled to a predetermined range, it is possible to manufacture a pouch film laminate body having excellent processibility and moldability. In addition, the amount of the slip agent present on the surface of the sealant layer may be different depending on a measurement method, so that an object is to measure an amount of the slip agent capable of implementing excellent processability and moldability by a specific measurement method.

The amount of the slip agent present on the surface of the sealant layer is 5 mg/m² to 25 mg/m². Specifically, the amount of the slip agent present on the surface of the sealant layer 30 may be 5.5 mg/m² or greater, 6 mg/m² or greater, 6.5 mg/m² or greater, or 7.0 mg/m² or greater, and 24 mg/m² or less, 22 mg/m² or less, 20 mg/m² or less, 18 mg/m² or less, 16 mg/m² or less, or 14 mg/m² or less. More specifically, the amount of the slip agent present on the surface of the sealant layer may be 5 mg/m² to 14 mg/m². If the amount of the slip agent present on the surface of the sealant layer is less than 5 mg/m², there is a problem in that a blocking phenomenon occurs in which pouch film laminate bodies are adhered to each other due to friction force when manufacturing the pouch film laminate body, thereby degrading processibility, and there is a problem in that the maximum molding depth is degraded when molding a cup portion of the pouch film laminate body. In addition, if the amount of the slip agent present on the surface of the sealant layer is greater than 25 mg/m², there is a problem in that a slip agent cleaning cycle of a molding mold is shortened due to an excessive amount of the slip agent present on the surface of the sealant layer, thereby degrading processibility, and there is a problem in that wrinkles are generated when molding a cup portion of a pouch film laminate body since the pouch film laminate body is stretched non-uniformly as the molding mold slips due to low friction force. If the wrinkles generated, an electrode assembly cannot be accommodated in close contact with the inside of the cup portion of the pouch film laminate body, so that there is a problem in that the energy density decreases. In this case, if the electrode assembly is forcibly accommodated, there is a problem in that the electrode assembly will break, thereby causing a short circuit.

Therefore, if the above-described range is satisfied, the blocking phenomenon between pouch film laminate bodies may be prevented, processibility may be excellent since a slip agent cleaning cycle of a molding mold is long, wrinkles may not be generated when molding a cup portion, and the maximum molding depth may be excellent.

A method for measuring the amount of a slip agent present on the surface of the sealant layer 30 is a method in which the amount of the slip agent is obtained by cutting the pouch film laminate body to 100 mm in an MD direction x 100 mm in a TD direction, adding 5 ml of chloroform dropwise on the surface of the sealant layer of the pouch film laminate body, followed by leaving the pouch film laminate body to stand for 1 minute, thereby preparing a slip agent extraction solution, and then measuring an amount of the slip agent contained in the slip agent extraction solution by gas chromatography.

In case of the above-described method, it is possible to extract a slip agent for a suitable amount of time by using a suitable type of a solvent, so that it is preferable in terms of accurately measuring an amount of the slip agent present on the surface of a sealant layer. On the contrary, if a slip agent is extracted for an excessive amount of time, there may be a problem in that not only the slip agent present on the surface of a sealant layer, but also the slip agent present inside the sealant layer is excessively extracted, so that there may be a problem in that an amount of the slip agent present on the surface of the sealant layer may not be accurately measured. If the amount of the slip agent present on the surface of the sealant layer is not accurately measured, there may be a problem in that a pouch film laminate body may not exhibit excellent processability and moldability effects even if the range of a slip agent according to the present invention is satisfied. For example, if a solvent is added dropwise on the surface of a sealant layer and left to stand for 3 minutes or more, a slip agent contained inside the sealant layer is excessively extracted in the solvent, so that it may be difficult to measure an accurate amount of the slip agent on the surface of the sealant layer.

For example, if two sheets of a pouch film laminate body is brough into contact with a sealant layer, thereby preparing a pocket body, and then acetone, not chloroform, is injected into an inner space of the pocket body and left to stand for 3 minutes, not 1 minute, in a state in which the surface of the sealant layer is in contact with the acetone, there is a problem in that a slip agent contained inside the sealant layer is excessively extracted in the solvent, rather than the slip agent of the surface of the sealant layer. In order to implement excellent moldability and processability, it is necessary to accurately measure an amount of the slip agent present on the surface of the sealant layer, rather than an amount of the slip agent contained inside the sealant layer. Therefore, if a slip agent contained inside a sealant layer is excessively precipitated, thereby measuring an amount of the slip agent on the surface of the sealant layer as described above, it is difficult to accurately identify an amount of the slip agent present on the surface of the sealant layer capable of implementing excellent moldability and processability.

That is, one feature of the present invention is to accurately measure an amount of a slip agent present on the surface of a sealant layer, which affects moldability and processibility, rather than an amount of the slip agent contained inside the sealant layer.

The gas chromatography measurement method is not limited as long as it is performed by using a commonly used measurement device, but may be performed by using, for example, GC-2010 plus (Shimadzu Co., Ltd.).

The slip agent is not particularly limited as long as it is a compound capable of imparting slip properties, but specifically, may include one or more selected from fatty acid amide-based compounds, and more specifically, may be one or more selected from the group consisting of saturated fatty acid amide, unsaturated fatty acid amide, substituted amide, methylol amide, saturated fatty acid bisamide, unsaturated fatty acid bisamide, fatty acid ester amide, and aromatic bisamide.

The saturated fatty acid amide is not particularly limited, but specifically, may be one or more selected from the group consisting of lauric acid amide, palmitic acid amide, stearic acid amide, behenic acid amide, and hydroxystearic acid amide.

The unsaturated fatty acid amide is not particularly limited, but specifically, may be one or more selected from the group consisting of oleic acid amide and erucic acid amide.

The substituted amide is not particularly limited, but specifically, may be one or more selected from the group consisting of N-oleyl palmitic acid amide, N-stearyl stearic acid amide, N-stearyl oleic acid amide, N-oleyl stearic acid amide, and N-stearyl erucic acid amide.

The methylol amide is not particularly limited, but specifically, may be methylol stearic acid amide.

The saturated fatty acid bisamide is not particularly limited, but specifically, may be one or more selected from the group consisting of methylene bisstearic acid amide, ethylene biscapric acid amide, ethylene bislauric acid amide, ethylene bisstearic acid amide, ethylene bishydroxy stearic acid amide, ethylene bisbehenic acid amide, hexamethylene bisstearic acid amide, hexamethylene bisbehenic acid amide, hexamethylene hydroxystearic acid amide, N,N'-distearyl adipic acid amide, and N,N'-distearyl sebacic acid amide.

The unsaturated fatty acid bisamide is not particularly limited, but specifically, may be one or more selected from the group consisting of ethylene bisoleic acid amide, ethylene biserucic acid amide, hexamethylene bisoleic acid amide, and N,N'-dioleyl sebacic acid amide.

The fatty acid ester amide is not particularly limited, but specifically, may be stearoamide ethyl stearate.

The aromatic bisamide is not particularly limited, but specifically, may be one or more selected from the group consisting of m-xylenebisstearic acid amide, m-xylenebishydroxystearic acid amide, and N,N'-cystearylisophthalic acid amide.

More specifically, the aromatic bisamide may include one or more selected from erucamide, behenamide, oleamide, and ethylene-bisamide. If the above-described conditions are satisfied, it is preferable in that a whitening phenomenon which occurs in a sealant layer may be prevented, and contamination which occurs during a molding process may be prevented.

Hereinafter, each layer of the pouch film laminate body according to the present invention will be described in detail.

### (Base layer)

The base layer 10 is disposed on the outermost layer of a battery case to protect an electrode assembly from an external impact and electrically insulate it, and the base layer 10 may include any one of polyethyleneterephthalate (PET) and nylon.

According to an embodiment, the base layer 10 may have a laminate structure of a polyethyleneterephthalate (PET) film 12 and a nylon film 14. At this time, it is preferable that the nylon film 14 is disposed on the gas barrier layer 20 side, that is, on the inside, and the polyethyleneterephthalate film 12 is disposed on the surface side of the battery case.

Polyethyleneterephthalate (PET) has excellent durability and electrical insulation, so that when the PET film is disposed on the surface side, durability and insulation properties are excellent. However, since the PET film has weak adhesion properties with an aluminum alloy thin film constituting the gas barrier layer 20, and has a different stretching behavior, when the PET film is disposed on the gas barrier layer side, de-lamination of the base layer and the gas barrier layer may occur during a molding process, and the gas barrier layer is not uniformly stretched, which may cause a problem in which the moldability is degraded. In comparison, since the nylon film has a similar stretching behavior to that of the aluminum alloy thin film constituting the gas barrier layer 20, when the nylon film is disposed between the polyethyleneterephthalate and the gas barrier layer, there may be an effect of improving the moldability.

The thickness of the base layer 10 may be 5 µm to 70 µm, specifically 7 µm to 65 µm, and more specifically 10 µm to 60 µm. If the above-described range is satisfied, moldability and rigidity after molding may be excellent.

In addition, if the base layer 10 has a laminate structure of the polyethyleneterephthalate (PET) film 12 and the nylon film 14, the polyethyleneterephthalate film may have a thickness of 5 µm to 30 µm, preferably 7 µm to 30 µm, and more preferably 10 µm to 27 µm, and the nylon film may have a thickness of 10 µm to 60 µm, preferably 10 µm to 55 µm, and more preferably 15 µm to 50 µm. When the thickness of the polyethyleneterephthalate film and the thickness of the nylon film satisfy the above-described ranges, the moldability and the rigidity after molding may be excellent.

### (Gas barrier layer)

The gas barrier layer 20 is laminated between the base layer 10 and the sealant layer 30 to secure mechanical strength of a pouch, block the entry/exit of a gas, moisture, or the like from the outside of a secondary battery, and prevent the leakage of an electrolyte from the inside of a pouch-type battery case.

The gas barrier layer 20 may be formed of a metal. For example, the gas barrier layer may be a metal thin film including one or more metals selected from the group consisting of aluminum (Al), copper (Cu), stainless steel (SUS), nickel (Ni), titanium (Ti), and Invar, but is not limited thereto.

According to an embodiment of the present invention, the gas barrier layer 20 may be formed of an aluminum alloy thin film. If the gas barrier layer 20 is formed by using the aluminum alloy thin film, it is possible to secure mechanical strength of a predetermined level or more, lighten the weight, supplement electrochemical properties by the electrode assembly and the electrolyte, and secure heat dissipation and the like. The aluminum alloy thin film may include an element other than aluminum (Al). For example, the aluminum alloy thin film may include one or more selected from the group consisting of iron (Fe), copper (Cu), chromium (Cr), manganese (Mn), nickel (Ni), magnesium (Mg), silicon (Si), and zinc (Zn).

In another example, the gas barrier layer 20 may be formed of a stainless steel thin film. Specifically, the gas barrier layer 20 may be manufactured by molding and/or processing a stainless steel thin film. The gas barrier layer 20 formed of stainless steel has a relatively low thermal conductivity, and thus, is effective in preventing or delaying thermal diffusion to other cells during thermal runaway, and has a relatively high toughness, and thus, may suppress the generation of cracks in a pouch during the use of a pouch-type battery. The stainless steel may include one or more selected from the group consisting of elements other than iron (Fe), for example, copper (Cu), chromium (Cr), manganese (Mn), nickel (Ni), magnesium (Mg), silicon (Si), and zinc (Zn).

The gas barrier layer 20 may have a thickness of 20 µm to 100 µm, preferably 30 µm to 90 µm, more preferably 40 µm to 85 µm, and even more preferably 40 µm to 80 µm. If the above-described range is satisfied, it is preferable in terms of suitably blocking the entry/exit of a gas, moisture, or the like from the outside of a secondary battery, and suitably preventing the leakage of an electrolyte from the inside of a pouch-type battery case. In addition, moldability and gas barrier performance may be improved when molding a cup portion.

In addition, an amount of a slip agent present on the surface of a sealant layer capable of implementing excellent moldability and processability when manufacturing a pouch-type battery case by drawing-molding a pouch film laminate body may be affected by the thickness of a gas barrier layer. That is, preferably, in the case of the amount of the slip agent present on the surface of the sealant layer described above, when the above-described thickness of the gas barrier layer is satisfied, better moldability may be exhibited.

### (Sealant layer)

The sealant layer 30 is to completely seal the inside of the pouch-type battery case by being thermally adhered to each other at a sealing portion when the pouch-type battery case accommodating the electrode assembly thereinside is sealed. To this end, the sealant layer 30 may be formed of a material having excellent thermal adhesive strength.

The sealant layer 30 may be formed of a material having insulation properties, corrosion resistance properties, and sealing properties. Specifically, the sealant layer 30 comes in direct contact with the electrode assembly and/or the electrolyte inside the pouch-type battery case, and thus, may be formed of a material having insulation properties and corrosion resistance properties. In addition, the sealant layer 30 is required to completely seal the inside of the pouch-type battery case, thereby blocking the movement of materials between the inside and the outside, and thus, may be formed of a material having high sealing properties (for example, excellent thermal adhesive strength). In order to secure the insulation properties, corrosion resistance properties, and sealing properties, the sealant layer 30 may be formed of a polymer material.

The sealant layer 30 may include one or more materials selected from the group consisting of polyethylene, polypropylene, polycarbonate, polyethyleneterephthalate, polyvinyl chloride, acrylic polymer, polyacrylonitrile, polyimide, polyamide, cellulose, nylon, polyester, polyparaphenylene benzobisoxazole, polyarylate, and Teflon, and specifically, may include a polyolefinic resin such as polypropylene (PP) and/or polyethylene (PE). In this case, the polypropylene may be composed of cast polypropylene (CPP), acid-modified polypropylene (PPa), polypropylene-ethylene copolymer, and/or polypropylene-butylene-ethylene ternary copolymer. More specifically, the sealant layer 30 may include one or more selected from polypropylene (PP), acid-modified polypropylene (PPa), and cast polypropylene (CPP), and more specifically, from the gas barrier layer side, the sealant layer 30 may be formed of any one of a laminate structure of acid-modified polypropylene and polypropylene, a laminate structure of acid-modified polypropylene and cast polypropylene, or a cast polypropylene single layer.

The sealant layer 30 may have a thickness of 30 µm to 130 µm, preferably 40 µm to 120 µm, and more preferably 60 µm to 100 µm. If the thickness of the sealant layer satisfies the above-described range, there is an effect of securing sealing strength of a sealing portion as well as securing moldability of a pouch film laminate body.

Meanwhile, the sealant layer 30 according to the present invention may have a composite-film structure in which two or more materials respectively form layers. For example, the sealant layer 30 may have a multi-layered structure. An adhesive layer and/or a skin layer may be disposed between each layer of the sealant layer 30 having a composite-film structure. The adhesive layer and/or the skin layer have thermal adhesion properties, and thus, may serve to help adhesion between each layer of the sealant layers 30. For example, the adhesive layer and/or the skin layer may include a polypropylene, resin, but are not limited thereto. In addition, the adhesive layer and/or the skin layer may be disposed between the sealant layer 30 and the gas barrier layer 20.

The pouch film laminate body of the present invention as described above may be manufactured through a method for manufacturing a pouch film laminate body known in the art. For example, the pouch film laminate body of the present invention may be manufactured through a method in which the base layer 10 is attached to an upper surface of the gas barrier layer 20 through an adhesive, and then the sealant layer 30 is formed on a lower surface of the gas barrier layer 20 through co-extrusion or an adhesive layer, and may be manufactured through a method such as dry lamination and sandwich lamination. However, the method for manufacturing a pouch film laminate body is not limited thereto.

The pouch film laminate body according to the present invention may have a thickness of 120 µm to 300 µm, specifically 130 µm to 280 µm, and more preferably 140 µm to 250 µm. If the thickness of the pouch film laminate satisfies the above-described ranges, it is possible to increase a molding depth while minimizing reduction in a battery accommodation space, degradation in sealing durability, and the like due to an increase in the thickness of the pouch film laminate.

### Pouch-type secondary battery

Next, a pouch-type secondary battery according to the present invention will be described.

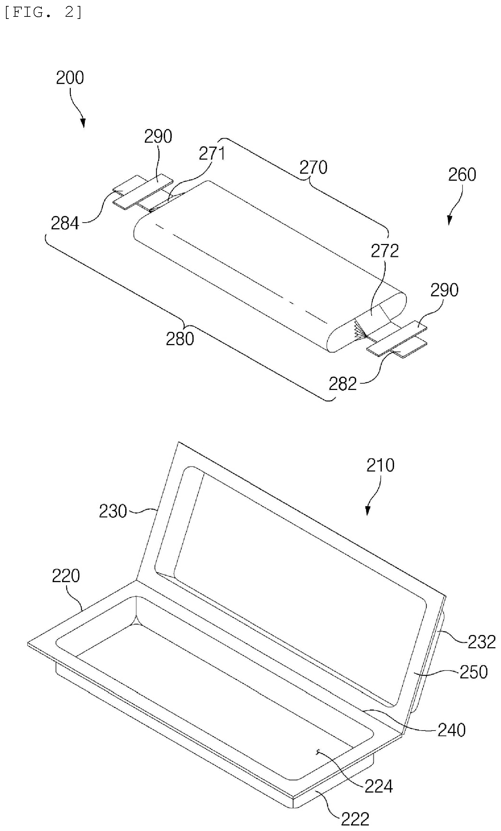

FIG. 2 is an exploded assembly view of a pouch-type secondary battery 200 according to the present invention.

As illustrated in FIG. 2, the pouch-type secondary battery 200 according to the present invention may include a pouch-type battery case 210 manufactured by molding the above-described pouch-type laminate body, and an electrode assembly 260 accommodated in the pouch-type battery case 210. Specifically, the pouch-type secondary battery 200 according to the present invention may include the pouch-type battery case 210, the electrode assembly 260, an electrode lead 280, an insulation part 290, and electrolyte (not shown).

Hereinafter, with reference to FIG. 2, each component of the pouch-type secondary battery of the present invention will be described in more detail.

### (Pouch-type battery case)

The pouch-type battery case 210 may be manufactured by molding the above-described pouch film laminate body. The pouch-type battery case 210 may accommodate the electrode assembly 260 thereinside. Since a detailed configuration and physical properties of the pouch film laminate body is the same as those described above, a specific description thereof will be omitted.

The pouch film laminate body may be drawn-molded and stretched by a punch or the like to manufacture the pouch-type battery case 210. As a result, the pouch-type battery case 210 may include a cup portion, and specifically, the pouch-type battery case 210 may include a cup portion 222 and a receiving portion 224. The receiving portion 224 is a place for accommodating an electrode assembly, and may refer to an accommodation space formed in a pocket form inside the cup portion 222 as the cup portion 222 is formed.

According to an embodiment of the present invention, the pouch-type battery case 210 may include a first case 220 and a second case 230 as illustrated in FIG. 2. The first case 220 includes the receiving portion 224 capable of accommodating the electrode assembly 260, and the second case 230 may cover the receiving portion 224 from above such that the electrode assembly 260 is not separated out of the battery case 210. The first case 220 and the second case 230 may be manufactured with one side of each thereof connected to each other as illustrated in FIG. 2, but are not limited thereto, and may be manufactured in various ways, such as being separated from each other and manufactured separately.

According to another embodiment of the present invention, if a cup portion is molded in a pouch film laminate body, two symmetrical cup portions 222 and 232 may be drawn-molded to be adjacent to each other in one pouch film laminate body. In this case, the cup portions 222 and 232 may be respectively formed in the first case 220 and the second case 230 as illustrated in FIG. 2. After the electrode assembly 260 is accommodated in the receiving portion 224 provided in the cup portion 222 of the first case 220, a bridge portion 240 formed between the two cup portions 222 and 232 may be folded such that the two cup portions 222 and 232 face each other. In this case, the cup portion 232 of the second case 230 may accommodate the electrode assembly 260 from above. Therefore, since the two cup portions 222 and 232 accommodate one electrode assembly 260, a thicker electrode assembly 260 may be accommodated than when there is one cup portion 222. In addition, since one edge of the secondary battery 200 is formed by folding the pouch-type battery case 210, the number of edges to be sealed when a sealing process is performed later may be reduced. Accordingly, the process speed of the pouch-type secondary battery 200 may be improved, and the number of sealing processes may be reduced.

The pouch-type battery case 210 may be sealed while accommodating the electrode assembly 260 such that a portion of the electrode lead 280 to be described later, that is, a terminal portion, is exposed. Specifically, when the electrode lead 280 is connected to an electrode tab 270 of the electrode assembly 260, and the insulation part 290 is formed in a portion of the electrode lead 280, the electrode assembly 260 is accommodated in the receiving portion 224 provided in the cup portion 222 of the first case 220, and the second case 230 may cover the receiving portion 224 from above. Thereafter, an electrolyte may be injected into the receiving portion 224, and a sealing portion 250 formed on the edge of the first case 220 and the second case 230 may be sealed.

The sealing portion 250 may serve to seal the receiving portion 224. Specifically, the sealing portion 250 may seal the receiving portion 224 by being formed along the edge of the receiving portion 224. The temperature at which the sealing portion 250 is sealed may be 180 °C to 250 °C, specifically 200 °C to 250 °C, and more specifically 210 °C to 240 °C. If the sealing temperature satisfies the above-described numerical ranges, the pouch-type battery case 210 may secure sufficient sealing strength by thermal adhesion.

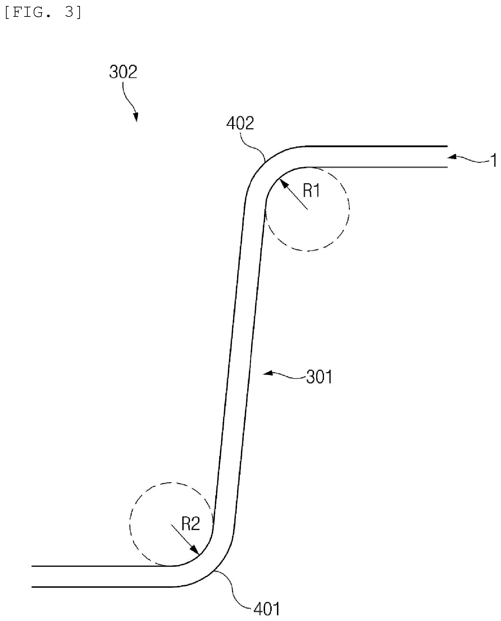

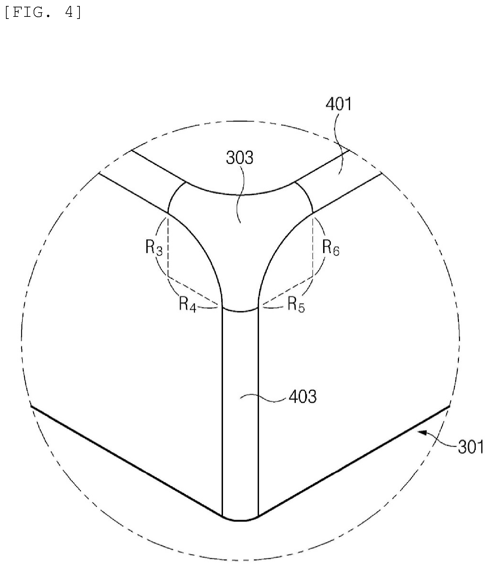

Referring to FIG. 3 and FIG. 4, a punch edge, a die edge, a punch corner, and a thickness edge that may be formed in a cup portion according to an embodiment of the present invention will be described in detail.

Referring to FIG. 3, it can be confirmed that in a pouch-type battery case manufactured by drawing-molding a pouch film laminate body 1 according to the present invention, when a receiving portion 302 is present at the above position, a portion corresponding to a cup portion 301, a radius of curvature R1 of a punch edge 401, and a radius of curvature R2 of a die edge 402 at this time are illustrated.

The punch edge 401 may connect an outer wall surrounding the periphery of the cup portion 301 and a bottom portion, respectively. However, if the punch edge 401 is not rounded, the punch edge 401 portion becomes sharp, so that when the pouch film laminate body 1 is molded, there is a problem in that stress is concentrated on the punch edge 401 of the cup portion 301, thereby easily generating cracks.

In addition, the die edge 402 may connect the outer wall to each of a bridge portion, a terrace portion, a sealing portion, and the like. However, if the die edge 402 is also not rounded, the die edge 402 becomes sharp, so that when the pouch film laminate body 1 is molded, there is a problem in that stress is concentrated on the die edge 402 of the cup portion 301, thereby easily generating cracks. Here, the rounding means forming a curved surface to have a curvature, and the curved surface may have a constant curvature, but is not limited thereto, and may have a non-constant curvature. In the present specification, when the punch edge 401, the die edge 402, a punch corner 303, and the like are formed by being rounded with a specific curvature, it means not only that all of the punch edge 401, the die edge 402, the punch corner 303, and the like have the specific curvature, but also that only some of the punch edge 401, the die edge 402, the punch corner 303, and the like have the specific curvature.

In order to solve the above problem, as illustrated in FIG. 3, the punch edge 401 and/or the die edge 402 may be formed by being rounded within a specific radius of curvature range. Therefore, the punch edge 401 and/or the die edge 402 formed by being rounded within the specific radius of curvature range may disperse stress concentrated thereon to some degree.

The cup portion may include a plurality of punch edges formed by being rounded with a radius of curvature of 1 mm or less, and specifically, the cup portion may include a plurality of punch edges formed by being rounded with a radius of curvature of 0.01 mm to 0.7 mm, and more specifically, the cup portion may include a plurality of punch edges formed by being rounded with a radius of curvature of 0.01 mm to 0.5 mm. If the above-described range is satisfied, it is preferable in that stress applied to the punch edge may be suitably dispersed, and an excellent energy density may be implemented.

The cup portion may include a plurality of die edges formed by being rounded with a radius of curvature of 1.5 mm or less, and preferably, the cup portion may include a plurality of die edges formed by being rounded with a radius of curvature of 0.01 mm to 1.25 mm, and more preferably, the cup portion may include a plurality of die edges formed by being rounded with a radius of curvature of 0.01 mm to 1.00 mm. If the above-described range is satisfied, it is preferable in that stress applied to the die edge may be suitably dispersed, and an excellent energy density may be implemented.

Referring to FIG. 4, it can be confirmed that in a pouch-type battery case manufactured by drawing-molding the pouch film laminate body 1 according to the present invention, the punch edge 401, the punch corner 303, and the thickness edge 403 formed in the cup portion 301 are illustrated.

As illustrated in FIG. 4, the punch corner 303 is a kind of vertex formed by the meeting of three edges. Specifically, the vertex is a kind formed by the meeting of two punch edges and one thickness edge, when the pouch film laminate body 1 is stretched, there is a problem in that stress is more concentrated on the punch corner 303. In order to solve the above problem, as illustrated in FIG. 4, the punch corner 303 may be formed by being rounded within a specific radius of curvature range. Therefore, the punch corner 303 formed by being rounded within the specific radius of curvature range may disperse stress concentrated thereon to some degree.

For example, a radius of curvature inside the punch corner 303 may change. That is, a radius of curvature of a central portion of the punch corner 303 and a radius of curvature of a peripheral portion of the punch corner 303 may be different from each other. Particularly, the radius of curvature of the central portion of the punch corner 303 may be greater than the radius of curvature of the peripheral portion of the punch corner 303. For example, since the peripheral portion of the punch corner 303 is relatively adjacent to two punch edges and one thickness edge, the radius of curvature of the peripheral portion of the punch corner 303 may be equal to a radius of curvature of at least one of the two punch edges and the thickness edge. On the other hand, since the central portion of the punch corner 303 is relatively spaced apart from two punch edges and one thickness edge, the radius of curvature of the central portion of the punch corner 303 may be greater than a radius of curvature of at least one of the punch edges and the thickness edge. That is, the punch corner 303 may have a radius of curvature equal to or greater than a radius of curvature of at least one of the punch edge and the thickness edge.

Therefore, the radius of curvature of the punch corner 303 may gradually increase from the peripheral portion of the punch corner 303 toward the central portion of the punch corner 303. In addition, as described above, since the radius of curvature inside the punch corner 303 may change without being constant, the central portion of the punch corner 303 may have an aspherical shape, rather than an exact spherical shape.

In addition, the radius of curvature as well we a range in the cup portion 301 in which the punch corner 301 is formed should be clearly set. If the range of the punch corner 303 formed in the cup portion 301 is excessively narrow, the pouch film laminate body is still excessively stretched, so that there is a problem of a whitening phenomenon and cracks. On the other hand, if the range of the punch corner 303 formed in the cup portion 301 is excessively wide, the space between the outer wall of the cup portion 301 and the electrode assembly is rather reduced, so an energy density with respect to the volume of a secondary battery 1 may increase.

Therefore, according to an embodiment of the present invention, as illustrated in FIG. 4, the punch corner 303 may be formed within 2 mm to 3.5 mm in a thickness direction R3 of the cup portion 301 from the punch edge 401, 2 mm to 3.5 mm in a longitudinal direction R4 of the cup portion 301 from the thickness edge 403, and 2 mm to 3.5 mm in a width direction R5 of the cup portion 301 from the thickness edge 403. In addition, the above-described range in which the punch corner 303 is formed may gradually increase as the depth of the cup portion 301 increases. Since the punch corner 303 of the cup portion 301 is formed as described above, stress more concentrated on the punch corner 303 may be dispersed, so that the problem of whitening and cracks may be prevented.

As illustrated in FIG. 4, the thickness edge 403 may be formed in the thickness direction of the cup portion 301, and at least one thickness edge 403 may be formed by being rounded. As illustrated in FIG. 4, the thickness edge 403 may be connected to two adjacent punch edges to form the above-described punch corner 303.

The radius of curvature of the thickness edge 403 may be equal to, or may be formed to be different from, the radius of curvature R1 of at least one punch edge of the two adjacent punch edges. For example, the cup portion may include a plurality of thickness edges 403 formed by being rounded with a radius of curvature of 0.5 mm to 5 mm, and preferably, the cup portion may include a plurality of thickness edges 403 formed by being rounded with a radius of curvature of 0.5 mm to 2 mm. If the above-described range is satisfied, stress applied to the thickness edge may be suitably dispersed, so that the occurrence of a whitening phenomenon and/or the generation of cracks may be suppressed.

Meanwhile, the range of an amount of a slip agent present on the surface of the sealant layer described above may be suitable for implementing excellent processability and moldability when manufacturing a pouch-type battery case including the punch edge, the die edge, the thickness edge, and/or the punch corner described above. Specifically, if the above-described curvature radius or length of the punch edge, the die edge, the thickness edge, and/or the punch corner are satisfied, molding conditions may be severe enough to cause breakage when drawing-molding the pouch film laminate body, so that it may be suitable to satisfy the range of an amount of a slip agent present on the surface of the sealant layer describe above in terms of implementing excellent processibility and moldability.

### (Electrode assembly)

The electrode assembly 260 may be inserted into the pouch-type battery case 210, and then sealed by the pouch-type case 210 after injecting an electrolyte thereto.

The electrode assembly 260 may be formed by sequentially stacking a positive electrode, a separator, and a negative electrode. Specifically, the electrode assembly 260 may include two types of electrodes, a positive electrode and a negative electrode, and a separator interposed between the electrodes to insulate the electrodes from each other.

The positive electrode and the negative electrode may each have a structure in which an active material slurry is applied to an electrode current collector in the form of metal foil or metal mesh including aluminum and copper. A slurry may typically be formed by stirring a granular active material, an auxiliary conductor, a binder, a conductive material, and the like in a state in which a solvent is added. The solvent may be removed in a subsequent process.

A slurry in which an electrode active material and a binder and/or a conductive material are mixed is applied to a positive electrode current collector and a negative electrode current collector to manufacture a positive electrode and a negative electrode, and the positive electrode and the negative electrode may be respectively laminated on both sides of a separator to manufacture the electrode assembly 260 in a predetermined shape. Types of the electrode assembly 260 may include a stack type, a jelly-roll type, a stack and fold type, and the like, but are not limited thereto.

The electrode assembly 260 may include the electrode tab 270.

The electrode tab 270 may be connected to each of the positive electrode and the negative electrode of the electrode assembly 260, and may protrude to the outside from the electrode assembly 260 to serve as a path through which electrons move between the inside and the outside of the electrode assembly 260. An electrode current collector included in the electrode assembly 260 may be composed of a portion to which an electrode active material is applied to and a terminal portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 2, the electrode tab 270 may protrude in different directions from the electrode assembly 260, but is not limited thereto, and may protrude in various directions such as protruding side by side in the same direction from one side thereof.

### (Electrode lead)

The electrode lead 280 may supply electricity to the outside of the secondary battery 200. The electrode lead 280 may be connected to the electrode tab 270 of the electrode assembly 260 by spot welding or the like.

The electrode lead 280 may be connected to the electrode assembly 260 and protrude to the outside of the pouch-type battery case 210 via the sealing portion 250. Specifically, one end of the electrode lead 280 may be connected to the electrode assembly 260, to the electrode tab 270 in particular, and the other end of the electrode lead 280 may protrude to the outside of the pouch-type battery case 210.

The electrode lead 280 may include a positive electrode lead 282 having one end connected to a positive electrode tab 272 and extending in a direction in which the positive electrode tab 272 protrudes, and a negative electrode lead 284 having one end connected to a negative electrode tab 274 and extending in a direction in which the negative electrode tab 274 protrudes. Both the positive electrode lead 282 and the negative electrode lead 284 may protrude to the outside of the battery case 210. Therefore, electricity generated inside the electrode assembly 260 may be supplied to the outside. In addition, since the positive electrode tab 272 and the negative electrode tab 274 are each formed to protrude in various directions, the positive electrode lead 282 and the negative electrode lead 284 may also extend in various directions. The positive electrode lead 282 and the negative electrode lead 284 may be made of different materials. That is, the positive electrode lead 282 and the positive electrode current collector may be made of the same material, which is aluminum (Al), and the negative electrode lead 284 and the negative electrode current collector may be made of the same material, which is copper (Cu) or copper coated with nickel (Ni). A portion of the electrode lead 280 protruding to the outside of the battery case 210 may become a terminal portion and be electrically connected to an external terminal.

### (Insulation part)

The insulation part 290 may prevent electricity generated from the electrode assembly 260 from flowing to the battery case 210 through the lead 280, and may maintain the sealing of the battery case 210. To this end, the insulation part 290 may be formed of a non-conductor having non-conductivity that does not conduct electricity well. In general, as the insulation part 290, an insulation tape or film which is easily attached to the electrode lead 280 and relatively thin is often used, but the present invention is not limited thereto, and any member capable of insulating the electrode lead 280 may be used.

The insulation part 290 may be disposed to surround the outer circumferential surface of the electrode lead 280. Specifically, at least a portion of the electrode lead 280 may be surrounded by the insulation part 290. In this case, the insulation part 290 may be disposed between the electrode lead 280 and the pouch-type battery case 210. The insulation portion 290 may be positioned limited to the sealing portion 250 in which the first case 220 and the second case 230 of the pouch-type battery case 210 are thermally fused, and may adhere the electrode lead 280 to the battery case 210.

### (Electrolyte)

The pouch-type secondary battery 200 according to the present invention may further include an electrolyte (not shown) injected into the pouch-type battery case 210. The electrolyte is for moving lithium ions generated by an electrochemical reaction of an electrode during charging /discharging of the secondary battery 200, and may include a non-aqueous organic electrolyte solution, which is a mixture of a lithium salt and an organic solvent or a polymer using a polymer electrolyte. Furthermore, the electrolyte may include a sulfide-based, oxide-based, or polymer-based solid electrolyte, and such a solid electrolyte may have flexibility to be easily deformed by an external force.

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made without departing from the scope and spirit of the invention, and it is obvious that such variations and modifications are within the scope of the appended claims.

### Examples and Comparative Examples

### Example 1: Manufacturing of pouch film laminate body

Acid-modified polypropylene (PPa) and polypropylene (PP) sequentially laminated and having a total thickness of 80 µm were prepared as a sealant layer by allowing an amount of slip agent (slip agent: erucamide) on the surface of polypropylene (PP) to be the same amount as described in Table 1 below.

Thereafter, on one surface of an aluminum alloy thin film having a thickness of 60 µm, a second adhesive film, a nylon film having a thickness of 25 µm, a first adhesive film, and a polyethyleneterephthalate (PET) film having a thickness of 12 µm were sequentially laminated, and on the other surface of the aluminum alloy thin film, the prepared sealant layer was sequentially laminated. As a result, a pouch film laminate body having a structure in which the prepared sealant layer (polypropylene/acid-modified polypropylene) / aluminum alloy thin film / second adhesive film / nylon film / first adhesive film / polyethyleneterephthalate film were sequentially laminated was manufactured.

### Examples 2 to 5 and Comparative Examples 1 to 4: Manufacturing of pouch film laminate body

A pouch film laminate body was manufactured in the same manner as in Example 1, except that the amount of the slip agent introduced to the sealant layer was changed, thereby changing the amount of the slip agent on the surface of the sealant layer as shown in Table 1 below.

### Experimental Example 1: Measurement of amount of slip agent on surface

### (Method A)

An amount of the slip agent on the surface of the pouch film laminate body respectively manufactured according to Examples 1 to 5 and Comparative Examples 1 to 4 was measured.

Specifically, the amount of the slip agent was obtained by cutting each pouch film laminate body to 100 mm in an MD d irection x 100 mm in a TD direction, adding 5 ml of chloroform dropwise on the surface of the sealant layer of the pouch film laminate body, followed by leaving the pouch film laminate body to stand for 1 minute, thereby preparing a slip agent extraction solution, and then measuring an amount of the slip agent contained in the slip agent extraction solution by gas chromatography. At this time, a gas chromatography (GC) measurement device was GC-2010 plus of Shimadzu Co., Ltd.

The measurement results are shown in [Table 1] below.

### (Method B)

An amount of the slip agent on the surface of the pouch film laminate body respectively manufactured according to Examples 1 to 5 and Comparative Examples 1 to 4 was measured.

Specifically, each pouch film laminate body was aged at 40 °C for 10 days, and then two sheets of the pouch film laminate body were cut to have a size of 100 mm (MD) x 100 mm (TD), and the two pouch film laminate bodies were brought into contact with a sealant layer and sealed at 200 °C to manufacture a pocket body. 1 ml of acetone was injected into an inner space of the pocket body by using a syringe, and left to stand 3 minutes in a state in which the surface of the sealant layer is in contact with the acetone, and then the acetone was extracted from the pocket body. An amount of the slip agent contained in the extracted acetone was measured using gas chromatography (GC).

The measurement results are shown in [Table 1] below.

### Experimental Example 2: Measurement of friction coefficient

A friction coefficient of the pouch film laminate body manufactured according to each of Examples 1 to 5 and Comparative Examples 1 to 4 was measured.

The friction coefficient was measured by a method in which a sled metal having a size of 130 mm (MD) x 65 mm (TD) and a weight of 200 g was brought into contact with a sealant layer of a pouch film laminate body having a size of 300 mm (MD) x 200 mm (TD).

Specifically, at a rate of 100 mm/min, the sled metal was moved 100 mm above the sealant layer, and the friction coefficient was measured by averaging kinetic friction coefficients measured 5 times in a 20 mm to 80mm section.

The measurement results are shown in [Table 1] below.

### Experimental Example 3: Evaluation of moldability of pouch film laminate body

### (Evaluation of molding depth)

The moldability of the pouch film laminate body manufactured according to each of Examples 1 to 5 and Comparative Examples 1 to 4 was evaluated.

As a method for evaluating the moldability of the pouch film laminate body, the pouch film laminate bodies were each cut into the same size of 300 mm (MD) x 400 mm (TD), and the maximum molding depth at which cracks were not generated was recorded while varying the molding dept in a battery case molding apparatus having two molding parts of a size of 61 mm (MD) x 159 mm (TD). Here, a punch and the molding part of the battery case molding apparatus were filleted at corners and edges, wherein the corner of the punch had a curvature of 2 mm and the edge thereof had a curvature of 0.5 mm, and the corner of the molding part had a curvature of 2.5 mm and the edge thereof had a curvature of 1 mm. Also, the clearance of the punch and the molding part was 0.5 mm.

At this time, in the cup portion of the molded pouch film laminate body, the radius of curvature R1 of the punch edge was 0.5 mm, the radius of curvature R2 of the die edge was 1.0 mm, the length of the punch corner in the thickness direction R3, the length of the cup portion in the longitudinal direction R4, and the length thereof in the width direction R5 were all 3.5 mm, and the radius of curvature of the thickness edge was 2.0 mm.

The measured molding depths are described in [Table 1] below.

### (Evaluation of occurrence of wrinkles)

Meanwhile, during the above-described evaluation of molding depth, when a pouch film was molded using an uncontaminated molding apparatus, if there were wrinkles in the cup portion of the pouch film laminate body at the maximum molding depth, it was evaluated as O, and if there were no wrinkles, it was evaluated as X.

The occurrence of wrinkles is described in [Table 1] below.

### Experimental Example 4: Measurement of slip agent cleaning cycle when molding pouch film laminate body

A slip agent cleaning cycle was measured when molding the pouch film laminate body manufactured according to each of Examples 1 to 5 and Comparative Examples 1 to 4.

Specifically, when continuously manufacturing a pouch film laminate body having a cup portion with the maximum molding depth, the slip agent cleaning cycle was measured based on the maximum number of strokes at which no wrinkles are generated.

The measurement results are described in [Table 1] below.

**[Table 1]**

| | Amount of slip agent on surface of sealant layer (mg/m²) | | Friction coefficient | Molding depth (mm) | Wrinkles | Slip agent cleaning cycle (other) |
|---|---|---|---|---|---|---|
| | Method A | Method B | | | | |
| Example 1 | 7 | 42 | 0.21 | 8 | X | 5000 |
| Example 2 | 10 | 60 | 0.12 | 8 | X | 4000 |
| Example 3 | 14 | 84 | 0.09 | 8 | X | 3000 |
| Example 4 | 19 | 114 | 0.07 | 8 | X | 2000 |
| Example 5 | 23 | 138 | 0.06 | 8 | X | 1000 |
| Comparative Example 1 | 1 | 6 | 0.80 | 5 | X | Greater than 5000 |
| Comparative Example 2 | 4 | 24 | 0.40 | 6 | X | Greater than 5000 |
| Comparative Example 3 | 26 | 156 | Less than 0.05 | 8 | O | 500 |
| Comparative Example 4 | 35 | 210 | Less than 0.05 | 8 | O | 50 |

Referring to [Table 1] above, it can be confirmed that Examples 1 to 5 have better moldability and a lower friction coefficient than Comparative Examples 1 and 2 in which the amount of the slip agent on the surface is insufficient.

In addition, it can be confirmed that Examples 1 to 5 have a longer slip agent cleaning cycle than Comparative Examples 3 and 4 in which the amount of the slip agent on the surface is excessive, and have no wrinkles when molding the pouch film laminate body.

Meanwhile, it can be confirmed that if an amount of the slip agent present on the surface of the sealant layer according to an embodiment of the present invention is measured by Method B, instead of the method for measuring an amount of slip agent (Method A), there is a problem in that even the slip agent present inside the sealant layer is excessively precipitated, thereby preventing the amount of the slip agent present on the surface of the sealant layer from being accurately measured. That is, it can be clearly confirmed that a range of an amount of a slip agent present on the surface of a sealant layer capable of implementing excellent processability and moldability according to the present invention is the range of the amount of the slip agent measured by the measurement method according to the present invention.

### [Description of the Reference Numerals or Symbols]

1: Pouch film laminate body
10: Base layer
12: Polyethylene terephthalate film
14: Nylon film
20: Gas barrier layer
30: Sealant layer
200: Pouch-type secondary battery
210: Pouch-type case
220: First case
222: Cup portion
224: Receiving portion
230: Second case
232: Cup portion
240: Bridge portion
250: Sealing portion
260: Electrode assembly
270: Electrode tab
272: Positive electrode tap
274: Negative electrode tap
280: Electrode lead
282: Positive electrode lead
284: Negative electrode lead
290: Insulation portion
301: Cup portion
302: Receiving portion
303: Punch corner
401: Punch edge
402: Die edge
403: Thickness edge

## Claims

1. A pouch film laminate body comprising a base layer, a gas barrier layer, and a sealant layer, which are sequentially laminated, wherein an amount of a slip agent present on the surface of the sealant layer is 5 mg/m² to 25 mg/m², wherein the amount of the slip agent is obtained by cutting the pouch film laminate body to 100 mm in an MD x 100 mm in a TD, adding 5 ml of chloroform dropwise on the surface of the sealant layer of the pouch film laminate body, followed by leaving the pouch film laminate body to stand for 1 minute, thereby preparing a slip agent extraction solution, and then measuring an amount of the slip agent contained in the slip agent extraction solution by gas chromatography.

2. The pouch film laminate body of claim 1, wherein the amount of the slip agent present on the surface of the sealant layer is 5 mg/m² to 14 mg/m².

3. The pouch film laminate body of claim 1, wherein the slip agent comprises one or more selected from fatty acid amide-based compounds.

4. The pouch film laminate body of claim 1, wherein the base layer comprises one or more of polyethyleneterephthalate (PET) and nylon.

5. The pouch film laminate body of claim 1, wherein the base layer has a thickness of 5 µm to 70 µm.

6. The pouch film laminate body of claim 1, wherein the gas barrier layer comprises one or more metals selected from the group consisting of aluminum (Al), copper (Cu), stainless steel (SUS), nickel (Ni), titanium (Ti), and Invar.

7. The pouch film laminate body of claim 1, wherein the gas barrier layer has a thickness of 20 µm to 100 µm.

8. The pouch film laminate body of claim 1, wherein the sealant layer comprises one or more selected from polypropylene (PP), acid-modified polypropylene (PPa), and cast polypropylene (CPP).

9. The pouch film laminate body of claim 1, wherein the sealant layer has a thickness of 30 µm to 130 µm.

10. The pouch film laminate body of claim 1, wherein the pouch film laminate body has a thickness of 120 µm to 300 µm.

11. A pouch-type battery case manufactured by drawing-molding the pouch film laminate body of claim 1.

12. The pouch-type battery case of claim 11, wherein the pouch-type battery case comprises a cup portion, wherein the cup portion includes a plurality of punch edges formed by being rounded with a radius of curvature of 1 mm or less.

13. The pouch-type battery case of claim 11, wherein the pouch-type battery case comprises a cup portion, wherein the cup portion includes a plurality of die edges formed by being rounded with a radius of curvature of 1.5 mm or less.

14. The pouch-type battery case of claim 11, wherein the pouch-type battery case comprises a cup portion, wherein the cup portion includes a plurality of thickness edges formed by being rounded with a radius of curvature of 0.5 mm to 5 mm.

15. A pouch-type secondary battery comprising the pouch-type battery case of claim 11.
